# EUROPÄISCHE PATENTSCHRIFT

(11) **EP 1 970 182 B1**
(45) Veröffentlichungstag und Bekanntmachung des Hinweises auf die Patenterteilung: **15.06.2011**
(21) Anmeldenummer: 07005069.5
(22) Anmeldetag: 12.03.2007
(51) Int. Cl.: B29C 33/00, B29C 67/24

(54) **Giesswerkzeug zur Herstellung einer längswasserdichten Kabelsatzdurchführung**
Casting tool for manufacturing a longitudinally water blocked cable loom duct
Outil de coulée destiné à la fabrication d'un passage de câblage à étanchéité longitudinale

(43) Veröffentlichungstag der Anmeldung: 17.09.2008
(73) Patentinhaber: Delphi Technologies, Inc., Troy, Michigan 48007 (US)
(72) Erfinder: Lamers, Joachim, 47506 Neukirchen-Vkuyn (DE); Packebusch, Swindhard, 42119 Wuppertal (DE)
(74) Vertreter: Denton, Michael John

(56) Entgegenhaltungen:
- EP-A2- 0 470 396
- DE-A1- 1 554 898
- DE-A1-102004 030 026
- GB-A- 1 256 224

## Beschreibung

Die vorliegende Erfindung betrifft ein Gießwerkzeug zur Herstellung einer längswasserdichten Kabelsatzdurchführung auf einem Kabelsatz gemäß dem Oberbegriff des Anspruchs 1.

Solch ein Werkzeug ist aus DE 10 2004 030 026 A1 bekannt.

Bei Kraftfahrzeugen werden häufig Kabelsätze aus feuchtigkeitsempfindlichen Bereichen wie beispielsweise dem Innenraum oder der Zentralelektrik herausgeführt, so dass es erforderlich ist, die Austrittsstellen der Kabel aus dem feuchtigkeitsempfindlichen Bereich abzudichten, damit in den feuchtigkeitsempfindlichen Bereich keine Feuchtigkeit eindringen kann. Um diesen Schutz vor unerwünschtem Feuchtigkeitseintritt in solch einen feuchtigkeitsempfindlichen Bereich zu gewährleisten, ist es bekannt, auf den Kabelsätzen Kabelsatzdurchführungen auszubilden, welche sich in die Austrittsstelle aus dem feuchtigkeitsempfindlichen Bereich einpassen lassen, so dass durch die Austrittsstelle keine Feuchtigkeit in den Bereich eintreten kann.

Diese Kabelsatzdurchführungen, welche auch als "Tüllen" bezeichnet werden, können beispielsweise aus PUR-Schaum bestehen. Um einen Kabelsatz mit einer Kabelsatzdurchführung zu versehen, wird der Kabelsatz in eine Kavität eingelegt bzw. durch die Kavität hindurchgeführt, welche die Negativform der herzustellenden Kabelsatzdurchführung darstellt. In die Kavität wird anschließend das genannte PUR-Material eingefüllt, wobei infolge der eintretenden Expansion des PUR-Materials die Zwischenräume zwischen den einzelnen Kabeln des Kabelsatzes verpresst werden, so dass jedes einzelne Kabel dicht umschlossen ist. Da bei diesem Herstellungsprozess jedoch die Kabelsätze durch die Kavitätsöffnungen aus der Kavität nach außen ragen, ist es erforderlich, die Kavitätsöffnungen abzudichten. Hierzu kommen üblicherweise einzelne bogen- oder halbkreisförmige Klemmleisten zum Einsatz, welche im Bereich der Kavitätsöffnungen in die Kavität eingesetzt werden, um die Kabelsätze gegenüber den Kavitätsöffnungen abzudichten. Solch eine Realisierung wird beispielsweise in der EP 0 470 396 A2 beschrieben. Allerdings ist es dabei erforderlich, unterschiedlich große Klemmleisten vorzuhalten, um je nach Stärke bzw. Durchmesser des jeweiligen Kabelsatzes eine einigermaßen zuverlässige Abdichtung gewährleisten zu können.

Die einzelnen Klemmleisten müssen dabei regelmäßig kontrolliert und ggf. ausgetauscht werden, damit bei der Herstellung der Kabelsatzdurchführungen kein Material aus der Kavität austritt. Die Vorhaltung unterschiedlich großer Klemmleisten sowie deren Kontrolle und insbesondere der gelegentliche Austausch der Klemmleisten stellt jedoch in unerwünschter Weise einen nicht zu vernachlässigenden Kostenfaktor dar. Darüber hinaus lässt sich selbst mit unterschiedlich großen Klemmleisten nicht immer eine optimale Abdichtung der Kavitätsöffnungen gegenüber den jeweiligen Kabelsätzen erzielen, was dazu führt, dass bei der Tüllenproduktion gelegentlich PUR-Material aus der Kavität austritt, welches es dann in einem nachgelagerten Bearbeitungsschritt zu entfernen gilt, wodurch weitere Kosten entstehen.

Der vorliegenden Erfindung liegt daher die Aufgabe zugrunde, ein Gießwerkzeug zur Herstellung einer längswasserdichten Kabelsatzdurchführung auf einem Kabelsatz anzugeben, bei dem die Kavitätsöffnungen zuverlässig gegenüber dem jeweiligen Kabelsatz mit einfachen Mitteln abdichtbar sind.

Diese Aufgabe wird mit einem Gießwerkzeug gelöst, welches die Merkmale des Anspruchs 1 aufweist. Insbesondere wird die Aufgabe dadurch gelöst, dass die Dichteinheit zumindest zwei relativ zueinander bewegliche Schliessbacken aufweist, welche derart zusammenwirken, dass sie je nach Relativstellung zueinander eine Klemmöffnung unterschiedlicher Grösse definieren.

Die Schliessbacken sind dabei an einem Hebelmechanismus angelenkt, dessen Kinematik derart ausgebildet ist, dass durch dessen Betätigung die beiden Schliessbacken eine gleich grosse Schliesskraft bzw. gleich grosse Schliessbewegungsanteile erfahren.

Um die Schliessbacken mit einer definierten Schliesskraft zu beaufschlagen, kann ein pneumatischer Antrieb vorgesehen sein, mit dem sich die Schliessbacken betätigen lassen. Der pneumatische Antrieb kann dabei insbesondere einen Druckminderer umfassen, mit dem sich die Schliesskraft für die Schliessbacken gezielt einstellen lässt. Mit Hilfe des Druckminderers kann somit die Schliesskraft auf solch einen Wert eingestellt werden, dass sie gross genug ist, um eine ausreichende Komprimierung des Kabelsatzes zu erreichen, gleichzeitig jedoch sicherzustellen, dass der Kabelsatz nicht abgeschert wird. Es werden somit keine aufwändigen elektronischen Vorrichtungen erforderlich, um die jeweilige Schliesskraft zu überwachen.

Die Schliessbacken lassen sich dabei soweit auseinander bewegen, dass ein abzudichtender Kabelsatz nicht etwa mit seinem freien Ende durch die Klemmöffnung hindurchgefädelt werden muss, sondern dass er seitlich in die von den Klemmbacken definierte Klemmöffnung eingeführt werden kann.

Dadurch, dass sich die Dichteinheit stufenlos verstellen lässt und somit ihre Klemmöffnung an jede beliebige Kabelsatzstärke angepasst werden kann, ist es nicht erforderlich, mehrere unterschiedliche Dichteinheiten vorzusehen, wie dies bei der herkömmlichen Lösung unter Verwendung von Klemmleisten der Fall ist. Vielmehr lässt sich die Dichteinheit bzw. die Größe deren Klemmöffnung individuell an die jeweils vorhandene Kabelsatzstärke anpassen, so dass auf die Vorhaltung unterschiedlich großer Dichteinheiten verzichtet werden kann.

Die stufenlose Einstellbarkeit der Dichteinheit bzw. deren Klemmöffnung erweist sich ferner dahingehend als vorteilhaft, dass dadurch eine gute Abdichtung der Kavitätsöffnungen gegenüber dem jeweiligen Kabelsatz sichergestellt werden kann. Im Unterschied zu der Lösung unter Verwendung von Klemmleisten, welche nur in bestimmten Größen verfügbar sind, lässt sich nämlich die Dichteinheit an Kabelsätze beliebiger Stärke bzw. beliebigen Durchmessers anpassen. Die stufenlose Verstellbarkeit der Dichteinheit bzw. deren Klemmöffnung erweist sich dabei insbesondere dahingehend als vorteilhaft, dass der sich durch die Klemmöffnung der Dichteinheit hindurch erstreckende Kabelsatz infolge einer Verkleinerung der Klemmöffnung geringfügig komprimieren lässt, so dass auch kleinste Zwischenräume zwischen den einzelnen Kabeln des Kabelsatzes so weit komprimiert werden, dass durch diese hindurch nur noch ein unwesentlicher Anteil an PUR-Material aus der Kavität nach außen gelangen kann.

Damit durch die Dichteinheit selbst kein PUR-Material infolge dessen Expansion in der Kavität austreten kann, können die Schließbacken jeweils einen Klauenabschnitt aufweisen, welche derart ineinander eingreifen bzw. sich gegenseitig überdecken, dass durch sie die bereits mehrfach erwähnte Klemmöffnung gebildet wird. Insbesondere können sich die Schließbacken dabei bereichsweise gegenseitig überdecken und plan aneinander anliegen, so dass kein PUR-Material zwischen den Schließbacken hindurch nach außen gelangen kann.

Gemäß einer weiteren Ausführungsform des erfindungsgemäßen Schließwerkzeugs kann eine der beiden Schließbacken einen Eingriffsabschnitt aufweisen, welcher in den Klauenabschnitt der anderen Schließbacke eingreift und eine zu dem Klauenabschnitt der anderen Schließbacke komplementär korrespondierende Gestalt aufweist. Durch den so erzeugten Eingriff der beiden Schließbacken kann erreicht werden, dass sich die beiden Schließbacken nicht in einer Weise überschneiden, dass dadurch der von ihnen aufgenommene Kabelsatz abgeschert wird. Darüber hinaus wird dadurch, dass der Eingriffsabschnitt der einen Schließbacke in den Klauenabschnitt der anderen Schließbacke eingreift und eine zu dem Klauenabschnitt komplementär korrespondierende Gestalt aufweist, die Dichtheit der Dichteinheit zusätzlich verbessert, da es durch die passgenaue Abstimmung der Schließbacken aufeinander für das PUR-Material schwieriger ist, sich einen Weg durch Dichteinheit hindurch zu bahnen.

Die Kavität des gattungsgemäßen Gießwerkzeugs setzt sich üblicherweise aus zwei Gießwerkzeug- oder Gehäusehälften zusammen, die in einer Ebene plan aneinander liegen. Die bereits zuvor mehrfach erwähnten Klemmleisten weisen dabei eine etwa halbkreisförmige Gestalt auf, wobei jeweils eine Klemmleiste in jeweils einer Gehäusehälfte im Bereich einer Kavitätsöffnung platziert wird, so dass, wenn die beiden Gehäusehälften plan aneinander anliegen, zwei im Bereich einer Kavitätsöffnung befindliche Klemmleisten eine ringförmige Abdichtung für den jeweiligen Kabelsatz darstellen. Die Klemmkräfte auf den Kabelsatz wirken dabei in der gleichen Richtung wie der Formschließdruck, mit dem die beiden Gehäusehälften miteinander verspannt werden.

Um zu vermeiden, dass durch das Festklemmen eines Kabelsatzes der Formschließdruck infolge der auf den Kabelsatz mittels der Dichteinheit aufgebrachten Klemmkräfte abnimmt, wird erfindungsgemäß vorgeschlagen, die Bewegungsrichtung der Schließbacken so zu orientieren, dass eine Richtungskomponente der Bewegung in Richtung der Schnittgeraden zeigt, in der sich die von der jeweiligen Kavitätsöffnung gebildete Ebene und die Ebene schneiden, in der die zwei Gehäusehälften aneinander anliegen. Mit anderen Worten nahem sich die beiden Schließbacken in einer in etwa um 90° versetzten Stellung gegenüber der Lösung unter Verwendung von Klemmleisten. Es lassen sich somit auf einen Kabelsatz über die Klemmbacken verhältnismäßig große Klemmkräfte zur Komprimierung der Kabelsätze aufbringen, ohne dass dadurch im Gegenzug die beiden Gehäusehälften der Kavität auseinander gepresst werden. Dies kann sich dahingehend als vorteilhaft erweisen, dass dadurch die Ausbildung von Trennhäuten an den herzustellenden Kabelsatzdurchführungen verringert wird, welche normalerweise entstehen können, wenn sich PUR-Material beim Herstellvorgang in die Trennebene zwischen den beiden Gehäusehälften presst. Es fällt somit kein oder nur noch ein geringer Entgratungsaufwand an, um die Trennhäute von den Kabelsatzdurchführungen zu entfernen.

Gemäß einer weiteren Ausführungsform der vorliegenden Erfindung kann die Dichteinheit als eine von der Kavität separate Einheit ausgebildet sein. Dies kann sich insbesondere dahingehend als vorteilhaft erweisen, dass ein und dieselbe Dichteinheit für unterschiedliche Kavitäten, sprich zur Herstellung von unterschiedlichen Kabelsatzdurchführungen, verwendet werden kann, wozu dann lediglich die jeweiligen Kavitäten bzw. die die Kavität bildenden Gehäusehälften ausgetauscht werden müssen.

Hierdurch kann eine gleichmäßige Betätigung der beiden Schließbacken erzielt werden.

Im Folgenden wird die vorliegende Erfindung anhand eines exemplarischen Ausführungsbeispiels unter Bezugnahme auf die beigefügten Figuren genauer erläutert, wobei
- Fig. 1: eine Untersicht des erfindungsgemäßen Gießwerkzeugs mit der Dichteinheit in einer geöffneten Stellung zeigt;
- Fig. 2: eine Untersicht des erfindungsgemäßen Gießwerkzeugs mit der Dichteinheit in einer geschlossenen Stellung zeigt; und
- Fig. 3: eine Ansicht des erfindungsgemäßen Gießwerkzeugs zeigt.

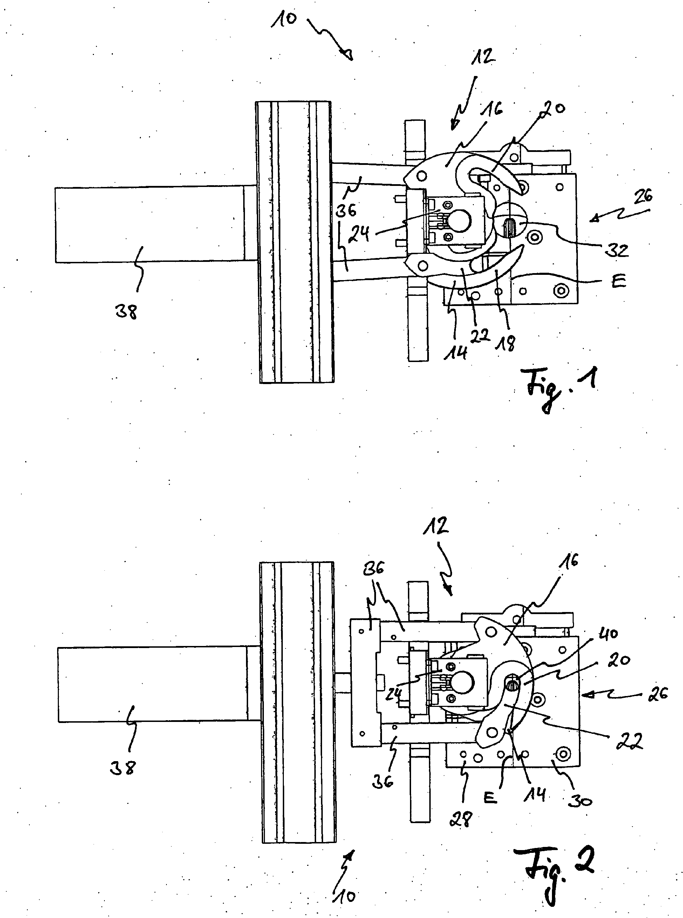

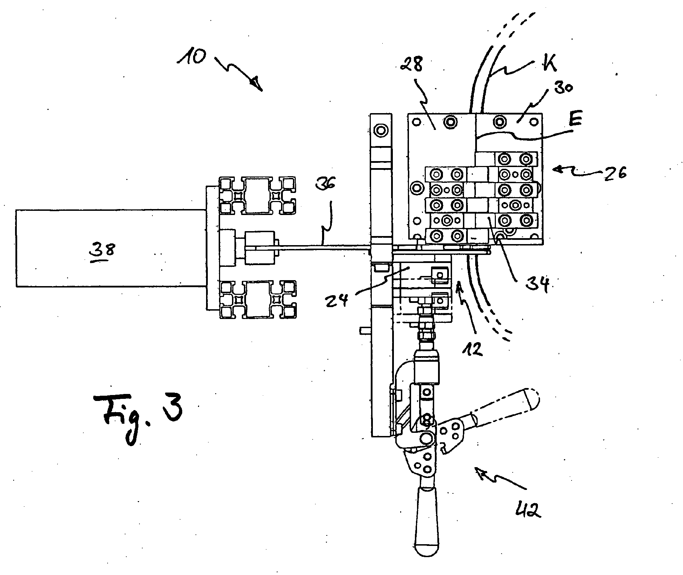

Wie am besten aus einer Zusammenschau der Fig. 1 und 3 entnommen werden kann, umfasst das erfindungsgemäße Gießwerkzeug 10 eine Kavität 26 sowie eine davon separate Dichteinheit 12, welche mittels eines Schnellspannmechanismus 42 von unten an die Kavität 26 angeklemmt ist. Die Kavität 26 setzt sich im Wesentlichen aus zwei über einen Scharniermechanismus 34 verbundene Gehäusehälfte 28, 30 zusammen, welche in einer Ebene E plan aneinander liegen. Die beiden Gehäusehälften 28, 30 weisen dabei miteinander korrespondierende Ausnehmungen auf, um zwei Kavitätsöffnungen 32 zu bilden, von denen in der Untersicht der Fig. 1 und 2 jedoch nur eine zu erkennen ist. Die Kavitätsöffnungen 32 dienen dabei dazu, um durch die Kavität 26 einen abzudichtenden Kabelsatz K hindurchzuführen, auf welchen es in der Kavität 26 eine Kabelsatzdurchführung herzustellen gilt.

Wie der Darstellung der Fig. 1 entnommen werden kann, weist jedoch der Kabelsatz K einen wesentlich geringeren Durchmesser als die Kavitätsöffnung 32 auf, weshalb gewisse Vorkehrungen getroffen werden müssen, um sicherzustellen, dass aus der Kavität 26 durch die Kavitätsöffnung 32 kein PUR-Material während der Herstellung einer Kabelsatzdurchführung austreten kann.

Dementsprechend ist im Bereich der Kavitätsöffnung 32 die Dichteinheit 12 vorgesehen, welche die Kavitätsöffnung 32 gegenüber dem Kabelsatz K abdichtet. Die Dichteinheit 12 weist dabei eine Klemmöffnung 40 auf, welche eine variierbare Größe besitzt, um Kabelsätze K unterschiedlicher Stärke gegenüber der Kavitätsöffnung 32 abzudichten.

Wie den Fig. 1 und 2 entnommen werden kann, umfasst die Dichteinheit 12 insbesondere zwei relativ zueinander bewegliche Schließbacken 14, 16, welche sich derart relativ verschwenken lassen, dass sie je nach Relativstellung zueinander eine unterschiedlich große Klemmöffnung 40 bilden. Hierzu besitzen die Schließbacken 14, 16 insbesondere jeweils einen Klauenabschnitt 18 bzw. 20, welche derart ineinander eingreifen bzw. einander überlappen, dass je nach Schließstellung der Schließbacken 14, 16 eine Klemmöffnung gewünschter Größe gebildet wird. Eine der Schließbacken 14, 16 liegt dabei plan an der Unterseite der beiden Gehäusehälften 28, 30 an, so dass kein PUR-Material zwischen dieser Schließbacke 14, 16 und den beiden Gehäusehälften 28, 30 aus der Kavitätsöffnung 32 nach außen gelangen kann.

Wie am besten den Darstellungen der Fig. 1 und 2 entnommen werden kann, sind die beiden Schließbacken 14, 16 an einem Lagerkörper 24 angelenkt, so dass sie relativ zueinander verschwenkt werden können. An den Schließbacken 14, 16 ist jeweils ein Hebel eines Hebelmechanismus 36 angelenkt, welcher seinerseits über eine Pneumatikeinheit 38 betätigt werden kann. Der Hebelmechanismus 36 ist dabei derart kinematisch mit der Pneumatikeinheit 38 gekoppelt, dass die Schließbacken 14, 16 bei einer Betätigung der Pneumatikeinheit 38 gleich große Schließkräfte bzw. gleich große Bewegungsanteile erfahren.

Um mit dem erfindungsgemäßen Gießwerkzeug 10 auf einem Kabelsatz K eine längswasserdichte Kabelsatzdurchführung herstellen zu können, wird zunächst die Kavität 26 geöffnet, indem die beiden Gehäusehälften 28, 30 über den Scharniermechanismus 38 auseinandergeklappt werden, so dass in die Kavität 26 der Kabelsatz K eingelegt und durch die beiden Kavitätsöffnungen 32 nach außen geführt werden kann.

Während des Einlegens des Kabelsatzes K in die Kavität 26 befindet sich die Dichteinheit 12 in der in der Fig.1 gezeigten Stellung, in der die beiden Schließbacken 14, 16 so weit aufgespreizt sind, dass die Klauenabschnitte 18, 20 nicht mehr in Eingriff miteinander stehen bzw. sich nicht mehr überdecken, um den Kabelsatz K in die Dichteinheit 12 von der Seite einführen zu können.

Nachdem der Kabelsatz K auf die voran beschriebene Art und Weise in dem Gießwerkzeug 10 platziert wurde, werden anschließend die beiden Schließbacken 14, 16 durch Betätigung der Pneumatikeinheit 38 geschlossen, so dass sich die Klauenabschnitte 18, 20 überdecken und in Eingriff gelangen, wobei insbesondere der Eingriffsabschnitt 22 der Schließbacke 14 in den Klauenabschnitt der Schließbacke 16 eingreift, wie dies in der Fig. 2 dargestellt ist. Wird nun mit Hilfe der Pneumatikeinheit 38 eine vordefinierte Klemmkraft auf den Kabelsatz K über die Schließbacken 14, 16 aufgebracht, so führt dies dazu, dass der Kabelsatz K in der Klemmöffnung 40 geringfügig komprimiert wird, so dass die Zwischenräume zwischen den einzelnen Kabeln des Kabelsatzes K so weit verkleinert werden, dass nur noch ein unwesentlicher Anteil an PUR-Material aus der Kavitätsöffnung 32 in Längsrichtung des Kabelsatzes K aus der Kavität 26 entweichen kann.

### Bezugszeichenliste

- 10: Gießwerkzeug
- 12: Dichteinheit
- 14: erste Schleißbacke
- 16: zweite Schleißbacke
- 18: Klauenabschnitt von 14
- 20: Klauenabschnitt von 16
- 22: Eingriffsabschnitt von 14
- 24: Lagerkörper
- 26: Kavität
- 28: erste Gehäusehälfte
- 30: zweite Gehäusehälfte
- 32: Kavitätsöffnung
- 34: Scharniermechanismus
- 36: Hebelmechanismus
- 38: Pneumatikeinheit
- 40: Klemmöffnung
- 42: Schnellspannmechanismus

- E: Ebene
- K: Kabelsatz

## Patentansprüche

1. Gießwerkzeug (10) zur Herstellung einer längswasserdichten Kabelsatzdurchführung auf einem Kabelsatz (K), mit einer Kavität (26) zur Aufnahme des abzudichtenden Kabelsatzes (K) und eines Gießmaterials, welche zwei Kavitätsöffnungen (32) zur Durchführung des Kabelsatzes (K) durch die Kavität (26) aufweist, wobei zumindest im Bereich einer der Kavitätsöffnungen (32) eine Dichteinheit (12) vorgesehen ist, welche die Kavitätsöffnung (32) gegenüber dem Kabelsatz (K) abdichtet und welche eine Klemmöffnung (40) mit variierbarer Größe zur dichten Aufnahme von Kabelsätzen (K) unterschiedlicher Stärke aufweist,
**dadurch gekennzeichnet, dass**
die Dichteinheit (12) zumindest zwei relativ zueinander bewegliche, an einem Hebelmechanismus (36) angelenkte Schließbacken (14, 16) umfasst, welche derart zusammenwirken, dass sie je nach Relativstellung zueinander die Klemmöffnung (40) variierbarer Größe definieren, wobei der Hebelmechanismus (36) derart ausgebildet ist, dass durch dessen Betätigung die beiden Schließbacken (14, 16) eine gleichgroße Schließkraft erfahren.

2. Gießwerkzeug nach Anspruch 1,
**dadurch gekennzeichnet, dass**
die Dichteinheit (12) stufenlos einstellbar ist, so dass ihre Klemmöffnung (40) in jeder Stellung eine andere Größe aufweist.

3. Gießwerkzeug nach Anspruch 1 öder 2,
**dadurch gekennzeichnet, dass**
die Klemmöffnung (40) bei jeder Öffnungsgröße einen in sich geschlossenen Umfang aufweist.

4. Gießwerkzeug nach Anspruch 1,
**dadurch gekennzeichnet, dass**
die Schließbacken (14, 16) jeweils einen Klauenabschnitt (18, 20) aufweisen, wobei die Klauenabschnitte (18, 20) derart ineinander eingreifen, dass durch sie die Klemmöffnung (40) gebildet wird.

5. Gießwerkzeug nach Anspruch 1 bis 4,
**dadurch gekennzeichnet, dass**
sich die Schießbacken (14, 16) bereichsweise überdecken und plan aneinander anliegen.

6. Gießwerkzeug nach zumindest einem der Ansprüche 1 bis 5,
**dadurch gekennzeichnet, dass**
eine der Schließbacken (14) einen Eingriffsabschnitt (22) aufweist, welcher in den Klauenabschnitt (20) der anderen Schließbacke (16) eingreift.

7. Gießwerkzeug nach zumindest einem der voranstehenden Ansprüche,
**dadurch gekennzeichnet, dass**
die Kavität (26) aus zwei Gehäusehälften (28, 30) zusammengesetzt ist, die in einer Ebene (E) plan aneinander anliegen, welche die beiden Kavitätsöffnungen (32) senkrecht schneidet, wobei die Bewegungsrichtung der Schließbacken (14, 16) so orientiert ist, dass eine Richtungskomponente in Richtung der Schnittgeraden zeigt, in der sich die von der jeweiligen Kavitätsöffnung (32) gebildete Ebene und die Ebene (E) schneiden, in der die zwei Gehäusehälften (28, 30) aneinander anliegen.

8. Gießwerkzeug nach zumindest einem der voranstehenden Ansprüche,
**dadurch gekennzeichnet, dass**
die Dichteinheit (12) als eine von der Kavität (26) separate Einheit ausgebildet ist, welche vorzugsweise an die Kavität (26) angeklemmt ist.

## Claims

1. Casting tool (10) for manufacturing a longitudinally-waterproof cable harness duct on a cable harness (K), with a cavity (26) for accommodating the cable harness (K) to be sealed and a casting material, wherein the cavity comprises two cavity openings (32) for feeding the cable harness (K) through the cavity (26), wherein at least in the area of one of the cavity openings (32) a sealing unit (12) is provided, sealing the cavity opening (32) against the cable harness (K) and comprising a clamping opening (40) with variable size for sealingly retaining cable harnesses (K) with various thickness,
**characterized in that**
the sealing unit (12) includes at least two closing jaws (14, 16), moveable relative to each other, hinged at a lever mechanism (36), cooperating in such a manner that, depending on relative position to each other, they define the clamping opening (40) of variable size, wherein the lever mechanism (36) is configured such that with its actuation the two closing jaws (14, 16) experience a same closing force.

2. Casting tool according to claim 1,
**characterized in that**
the sealing unit (12) is continuously adjustable so that its clamping opening (40) has a different size in each position.

3. Casting tool according to claim 1 or 2,
**characterized in that**
the clamping opening (40) comprises a closed perimeter with each opening size.

4. Casting tool according to claim 1,
**characterized in that**
the closing jaws (14, 16) each comprise a clutch portion (18, 20), wherein the clutch portions (18, 20) are engaged such that they form the clamping opening (40).

5. Casting tool according to claim 1 to 4,
**characterized in that**
the closing jaws (14, 16) overlap partially and abut flatly.

6. Casting tool according to at least one of the claims 1 to 5,
**characterized in that**
one of the closing jaws (14) comprises an engagement portion (22) engaging with the clutch portion (20) of the other closing jaw (16).

7. Casting tool according to at least one of the preceding claims,
**characterized in that**
the cavity (26) is combined of two housing parts (28, 30) abutting flatly in a plane (E), which cuts the two cavity openings (32) vertically, wherein the direction of movement of the closing jaws (14, 16) is oriented such that a directional component is directed toward the intersection line, in which the plane formed of the respective cavity opening (32) and the plane (E), in which the two housing parts (28, 30) flatly abut, intersect.

8. Casting tool according to at least one of the preceding claims,
**characterized in that**
the sealing unit (12) is formed as a unit separate from of the cavity (26), preferably attached to the cavity (26).

## Revendications

1. Outil de coulée (10) pour réaliser sur un ensemble de câbles (K) un passage de câblage à étanchéité longitudinale, comportant une cavité (26) destinée à recevoir l'ensemble de câbles (K) à étancher, et un matériau de coulée, ladite cavité comportant deux ouvertures de cavité (32) pour la traversée de l'ensemble de câbles (K) à travers la cavité (26), dans lequel une unité d'étanchement (12) est prévue au moins dans la région de l'une des ouvertures de cavité (32), cette unité étanchant l'ouverture de cavité (32) par rapport à l'ensemble de câbles (K) et présentant une ouverture à serrage (40) de taille variable pour recevoir de façon étanche des ensembles de câbles (K) d'épaisseurs différentes,
**caractérisé en ce que**
l'unité d'étanchement (12) comprend au moins deux mâchoires de fermeture (14, 16) mobiles l'une par rapport à l'autre et articulées sur un mécanisme à levier (36), lesquelles coopèrent de telle façon que, selon leur position relative l'une par rapport à l'autre, elles définissent l'ouverture à serrage (40) de taille variable, et le mécanisme à levier (36) est réalisé de telle façon que, par son actionnement, les deux mâchoires de fermeture (14, 16) subissent une force de fermeture de même intensité.

2. Outil de coulée selon la revendication 1,
**caractérisé en ce que** l'unité d'étanchement (12) est réglable en continu, de sorte que son ouverture à serrage (40) présente dans chaque position une autre taille.

3. Outil de coulée selon la revendication 1 ou 2,
**caractérisé en ce que** l'ouverture à serrage (40) présente, à chaque taille d'ouverture, un périmètre fermé sur lui-même.

4. Outil de coulée selon la revendication 1,
**caractérisé en ce que** les mâchoires de fermeture (14, 16) comportent chacune un tronçon en forme de griffe (18, 20), les tronçons en forme de griffe (18, 20) s'engageant l'un dans l'autre de telle façon qu'ils définissent l'ouverture à serrage (40).

5. Outil de coulée selon la revendication 1 à 4,
**caractérisé en ce que** les mâchoires de fermeture (14, 16) se recouvrent localement et s'appliquent à plat l'une contre l'autre.

6. Outil de coulée selon l'une au moins des revendications 1 à 5,
**caractérisé en ce que** l'une des mâchoires de fermeture (14) comprend un tronçon d'engagement (22) qui s'engage dans le tronçon en forme de griffe (20) de l'autre mâchoire de fermeture (16).

7. Outil de coulée selon l'une au moins des revendications précédentes,
**caractérisé en ce que** la cavité (26) est composée de deux moitiés de boîtier (28, 30) qui s'appliquent à plat l'une contre l'autre dans un plan (E) qui recoupe perpendiculairement les deux ouvertures de cavité (32), la direction de déplacement des mâchoires de fermeture (14, 16) étant orientée de telle façon qu'une composante directionnelle vise dans la direction de la droite d'intersection dans laquelle se recoupent le plan formé par l'ouverture de cavité respective (32) et le plan (E) dans lequel les deux moitiés de boîtier (28, 30) s'appliquent l'une contre l'autre.

8. Outil de coulée selon l'une au moins des revendications précédentes,
**caractérisé en ce que** l'unité d'étanchement (12) est réalisé sous forme d'unité séparée de la cavité (26), qui est de préférence appliquée par serrage contre la cavité (26).
